# EUROPÄISCHE PATENTANMELDUNG

(11) **EP 0 631 112 A1**
(43) Veröffentlichungstag der Anmeldung: **28.12.1994**
(21) Anmeldenummer: 94103774.9
(22) Anmeldetag: 11.03.1994
(51) Int. Cl.: G01D 11/30, G12B 9/08

(54) **Dichtung**

(30) Priorität: 24.06.1993 DE 4320939
(71) Anmelder: Firma Carl Freudenberg, D-69469 Weinheim (DE)
(72) Erfinder: Martsfeld, Rainer, D-67071 Ludwigshafen (DE); Kuhlmann, Thomas, Dr., D-69120 Heidelberg (DE); Vogt, Rolf, D-68723 Oftersheim (DE); Wentzler, Hanno, D-69469 Weinheim (DE)

(57) **Zusammenfassung**

Dichtung mit einem polymeren Werkstoffkörper (2) an dem zumindest in einem Teilbereich ein flexibles Hilfsglied (5) unverrückbar festgelegt ist, das zur Nutzung zumindest einer elektrischen Funktion geeignet ist, wobei das flexible Hilfsglied (5) als elektrischer Impulsgeber und/oder Sensor ausgebildet ist.

## Beschreibung

Die Erfindung betrifft eine Dichtung mit einem polymeren Werkstoffkörper, an dem zumindest in einem Teilbereich ein flexibles Hilfsglied unverrückbar festgelegt ist, das zur Nutzung zumindest einer elektrischen Funktion geeignet ist.

Eine derartige Dichtung ist aus der DE-OS 40 38 394 bekannt. Sie ist zur dichten Durchführung wenigstens eines Leiters durch die Wand eines Gehäuses bestimmt, das eine Flüssigkeit und ein sekundäres Aggregat umschließt mit einem daran angebrachten Sensor. Der Sensor ist mit dem flexiblen Ende des Leiters verbunden und geeignet, bestimmte Meßwerte zu erfassen. Die sich während der bestimmungsgemäßen Verwendung ergebende Lage des Sensors wird maßgeblich durch die Lage des Aggregats bestimmt und erfordert besondere Genauigkeit bei dessen Montage, wenn es auf eine gute Meßgenauigkeit ankommt. Hieraus resultieren hohe Montagekosten.

Aufgabe der Erfindung ist es, eine Dichtung anzugeben, die einfach montierbar ist und es problemlos erlaubt, Meßwerte einer Meßstelle hochpräzise zu erfassen.

Diese Aufgabe wird erfindungsgemäß bei einer Dichtung nach dem Oberbegriff mit den kennzeichnenden Merkmalen des Patentanspruchs 1 gelöst. Auf vorteilhafte Ausgestaltungen nehmen die Unteransprüche bezug.

Die erfindungsgemäße Dichtung zeichnet sich dadurch aus, daß das flexible Hilfsglied als elektrischer Impulsgeber und/oder Sensor ausgebildet ist. Hierdurch können Signale wie z.B. die Drehzahl, die Temperatur, die Feuchtigkeit oder der Druck erfaßt,in ein elektrisches Signal umgeformt und weitergeleitet werden.

Dabei kann das Hilfsglied in den polymeren Werkstoffkörper eingebettet oder mit der Oberfläche des Werkstoffkörpers verklebt sein. Dabei ist es unerheblich, an welcher Stelle das Hilfsglied an dem Werkstoffkörper angebracht ist. Die Anbringunsstelle kann allein unter dem Gesichtspunkt der optimalen Meßwerterfassung erfolgen. In jedem Falle ergibt sich eine sehr geaue Positionierung des Hilfsgliedes.

Die Herstellung der Dichtung erfolgt unter Verwendung der bekannten Spritz-, Preß- oder Gießwerkzeuge. Die Herstellung von solchen Werkzeugen erfolgt mit einer großen Genauigkeit, beispielsweise im Tausendstel-Millimeter-Bereich. Die Verbindung des Hilfsgliedes mit dem Werkstoffkörper erfolgt zweckmäßig in der Weise, daß das flexible Hilfsglied in das Werkzeug eingelegt und durch den anschließend in flüssigem oder teigigem Zustand eingepreßten Werkstoff an die Wandung angedrückt und mit dem Werkstoff verbunden wird. Hierbei nimmt das Hilfsglied die genaue Form des Werkzeuges an und es wird zugleich an einer präzise festlegbaren Stelle mit dem sich verfestigenden Werkstoffkörper der Dichtung dauerhaft verbunden. Es kann einen elektrischen Impulsgeber und/oderSensor enthalten.

Das Hilfsglied kann durch einen flexiblen Leiter mit einer Steckeinrichtung oder einer Meßeinrichtung verbunden sein, die zumindest teilweise in den Werkstoffkörper eingebettet ist. Dadurch erst wird es möglich, den Impulsgeber und/oder Sensor besonders einfach in die Dichtungseinrichtung zu integrieren. Es ist mit Hilfe flexibler Leiterplatten möglich, auf kleinstem Raum viele Elemente unterzubringen. Durch die Flexibilität kann gewährleistet werden, daß die Elemente an die Paßform der Dichtung ohne Zusatzelemente angepaßt sind. Der Sensor oder Impulsgeber kann auch auf einer flexiblen Leiterplatte angeordnet sein und elektrisch leitend direkt in Kontakt mit der Steckverbindung stehen, welche als Interface für weitere Meß- und Verarbeitungsgeräte dient. Es sind bei einer solchen Ausführung keine zusätzlichen Leitungen erforderlich. Dadurch wiederum werden bei einer beonders einfachen Montage mögliche Meß- und Erfassungsfehler vermieden.

Der Impulsgeber oder Sensor kann auch durch eine flexible Leiterplatte gebildet sein, die ringförmig in sich geschlossen ausgebildet ist. Auf einer derartigen Leiterplatte können zur Impulsgebung in Umfangsrichtung verteilte Codes aufgebracht sein. Auf dem Trägermaterial der flexiblen Leiterplatte sind diese Codes in Quer- oder Längsrichtung angebracht. Dabei erstrecken sie sich in einem Abstand A voneinander. Auf diese Weise kann ein Impulsgeber mit einfachen Mitteln realisiert werden, der ohne komplizierte Konstruktionen und montageaufwendige Herstellungsschritte verfügbar ist Die für die Impulsgebung bestimmten Codes können gegebenenfalls magnetisiert sein. Die Integration der Impulsgebung und -erfassung sowie deren Weiterleitung innerhalb der Dichtungseinrichtung ermöglichen eine miniaturisierte Bauweise. Das gesamte System ist kostengünstig herstellbar und kundenfreundlich. Weiterhin ist mit diesem System eine Erfassung nicht nur der Drehzahl möglich, sondern es können auch Signale wie die Temperatur, die Feuchtigkeit oder der Druck erfaßt und weiterverarbeitet werden mit einer großen Genauigkeit.

Die für den Impulsgeber und die leitende Verbindung zwischen Sensor und Steckverbindung zur Anwendung kommenden flexiblen Leiterplatten können eine rechteckige Form aufweisen. Bei einer solchen Bauform ist keine zusätzliche Anpassung an die Form des Werkstoffkörpers und des Maschinenteiles erforderlich. Sie läßt sich leicht herstellen und mit dem Werkstoff des Werkstoffkörpers umspritzen. Die Anpassung an die Gestalt des Werkstoffkörpers ergibt sich hierbei selbsttätig.

Es ist auch möglich, mehrere Impulsgeber und/ode Sensoren an oder in dem Werkstoffkörper anzubringen, um gegebenenfalls mehrere unterschiedliche Signale für unterschiedliche Anwendungen zu erfassen.

Das Hilfsglied kann ringförmig in sich geschlossen ausgebildet sein. Das heißt, daß das Hilfsglied in Umfangsrichtung den Werkstoffkörper umschließt. Es ist nicht nur die Erfassung der Drehzahl möglich, sondern auch die Erfassung des Druckes. Die kann als eine mögliche Ausführung erfolgen, in dem das Hilfsglied durch ein Piezzoelement gebildet ist.

Durch die Festlegung des Sensors am Werkstoffkörper einer Dichtung ist es möglich, auftretende Leckage oder die Temperatur der Dichtkante zu erfassen. Der Sensor ist vorzugsweise als ein Hallsensor ausgeführt. Eine andere Ausführung des Sensors kann durch eine elektrische Schaltung mit Widerstand und Kapazität realisiert sein, wobei hierfür die flexible Leiterplatte, auf der sich der Sensor befindet, zugleich der Spannungsversorgung und der Weiterleitung der Signale dient.

Zur Erfassung der Temperatur kann das Hilfsglied als Thermoelement in Verbindung mit einer Brückenschaltung ausgebildet sein. Durch die Verwendung von flexiblen Leiterplatten ist die Unterbringung dieser Elemente ohne zusätzliche Hilfsmittel möglich.

Eine weitere Ausführung stellt die Bildung einer Funktionseinheit dar, wobei das erste Hilfsglied mit dem mit dem relativbewegbaren Maschinenteil verbundenen zweiten Hilfsglied zusammengefaßt werden kann. Dabei können beide Hilfsglieder einander gegenüberliegend angeordnet sein, beispielsweise im Bereich einander unmittelbar gegenüberliegender Seiten. Dies hat den Vorteil, daß die beiden Hilfsglieder einander in besonders präziser Weise zugeordnet sind.

Mit der erfindungsgemäßen Dichtung wird eine Vorrichtung angegeben, die eine Integration einer Dichtung mit einem Impulsgeber und/oder Sensor beinhaltet. Durch die Verwendung von flexiblen Leiterplatten können durch eine miniaturisierte Bauweise Meßinstrumente unmittelbar an der Dichtungseinrichtung angeklebt oder anvulkanisiert werden. Dadurch ist eine genaue und einfache Erfassung der Signale möglich. Gleichzeitig können unterschiedliche Signale erfaßt werden. Die Herstellung des oben genannten Dichtungssystemes bedarf keiner aufwendigen konstruktiven Montageschritte und wirkt sich kostengünstig auf die Erfassung und Verarbeitung der Signale aus.

Nachfolgend werden anhand von Zeichnungen Ausführungsformen des erfindungsgemäßen Dichtungssytems beschrieben.

Es zeigen:
Fig. 1: Funktionseinheit einer Dichtung mit Sensor und Impulsgeber.
Fig. 2: Impulsgeber als flexible Leiterplatte.
Fig. 3: Werkstoffkörper mit Impulsgebern.
Fig. 4 und 5: Werkstoffkörper mit Sensor. Fig. 6: Vorschaltelement mit einem Impulsgeber.

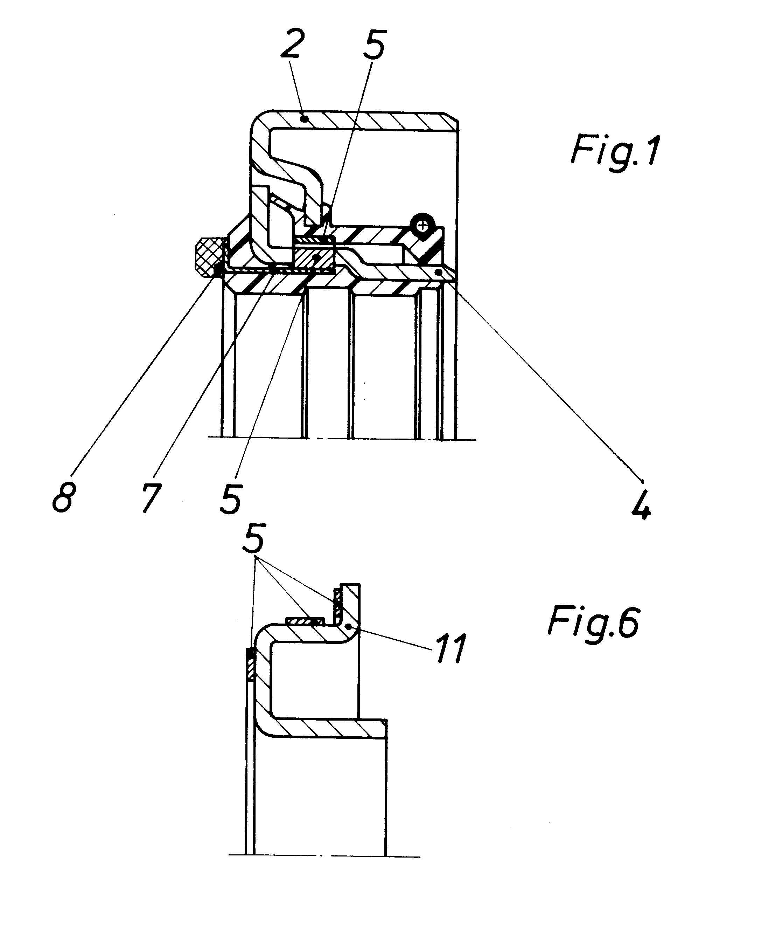

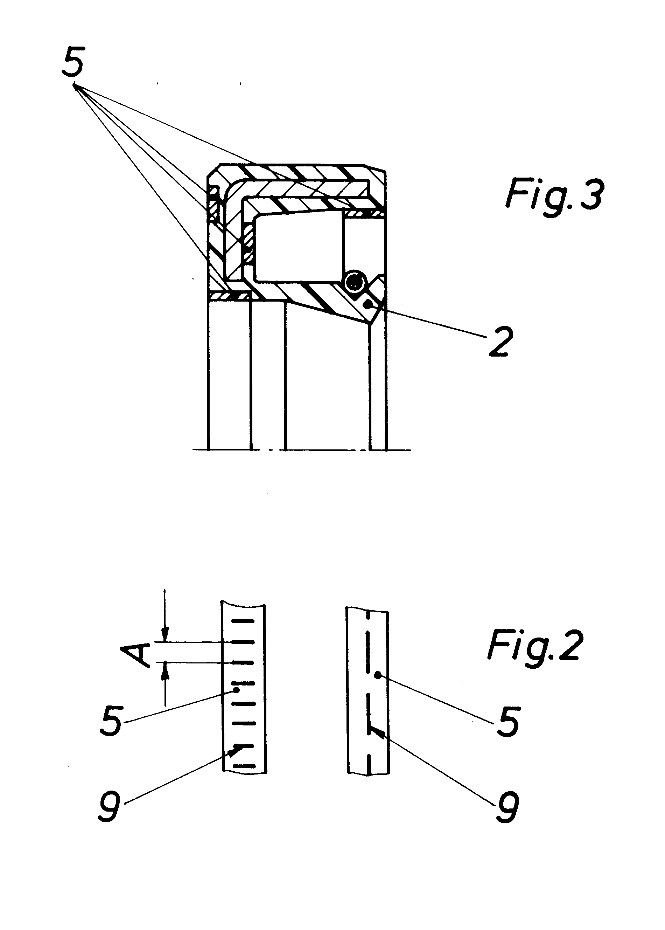

In Figur 1 ist eine Funktionseinheit einer Dichtung mit einem Sensor und einem Impulsgeber als Hilfsglieder gezeigt. Die Dichtung umfaßt einen Werkstoffkörper 2, welcher aus einem Elastomermaterial gebildet ist. Weiterhin umfaßt die Dichtung einen Maschinenteil 4. Am Werkstoffkörper 2 ist zumindest in einem Teilbereich ein flexibles Hilfsglied 5 unverrückbar festgelegt. Dieses Hilfsglied 5 ist ein Impulsgeber und als flexible Leiterplatte ausgebildet, wobei das Hilfsglied zur Nutzung zumindest einer elektrischen Funktion geeignet ist. Die Fig. 2 zeigt den Aufbau einer als Impulsgeber 5 ausgebildeten Leiterplatte. Auf dem Trägermaterial dieser Leiterplatte sind zur Impulserzeugung Codes 9 angeordnet. Aus der Darstellung ist ersichtlich, daß die Codes 9 entsprechend ihrer Lage am Werkstoffkörper 2 (Fig. 3) auf der Leiterplatte in Längs- bzw. Querrichtung angeordnet sind und sich in einem Abstand A voneinander erstrecken.

Die Codes 9 sind vorzugsweise aus Eisen oder Kupfer gebildet, wobei die Eisenform magnetisierbar ist. Durch die Verwendung von flexiblen Leiterplatten als Impulsgeber kann der Impulsgeber sehr genau an die Form des Werkstoffkörpers 2 angepaßt werden. Weiterhin ist durch das Leiterplattenmaterial ein Anvulkanisieren oder Ankleben an den polymeren Werkstoff 2 ohne zusätzlichen Montageaufwand möglich. Die geringen Abmessungen ermöglichen die Unterbringung des Impulsgebers in der Dichtung an jeder beliebigen Stelle. Durch das direkte Aufbringen des Impulsgebers auf den Werkstoffkörper 2 können Fehler, wie sie durch räumliche Trennung beider Teile entstehen bei der Signalerfassung vermieden werden. Die vorzugsweise rechteckige Form der Leiterplatte verstärkt diese Wirkung.

Aus der Figur 1 ist weiterhin ersichtlich, daß neben dem ersten Hilfsglied 5, dem Impulsgeber ein Sensor als zweites Hilfsglied 5 in der Dichtung angebracht ist. Dieser Sensor befindet sich auf dem relativ bewegbaren Maschinenteil innerhalb der Dichtung. Der Sensor ist dabei durch eine Leitung 7 mit einer Steckverbindung 8 verbunden. Die Steckverbindung 8 befindet sich auf dem Außenfläche der Dichtung und dient als Interface zwischen Sensor und für die Weiterverarbeitung der Signale in anschließbaren Meßgeräten. Die Leitung 7 ist vorzugsweise eine flexible Leiterplatte, die zur Weiterleitung der Signale und / oder zur Spannungsversorgung des Sensors verwendet wird. Dadurch können der Sensor als auch die Steckverbindung 8 leitend ohne zusätzliche Verbindungselemente miteinander verbunden werden.

Vorzugsweise wird der Sensor dem Impulsgeber unmittelbar gegenüberliegend (Fig. 1) angeordnet, so daß zusätzliche Fehler vermieden werden. Die Unterbringung vom Sensor und dem Impulsgeber in der Dichtung verhindert die Schmutz- oder Wasserablagerung auf diesen Signalerfassungsintrumenten und damit wird eine zusätzliche Fehlerquelle ausgeschaltet. Auch ist es möglich, den Druck zu erfassen. Dazu ist das Hilfsglied 5 als Piezzoelement ausgebildet. Eine andere Einsatzmöglichkeit besteht in der Temperaturerfassung mittels eines Thermoelements als Hilfsglied 5.

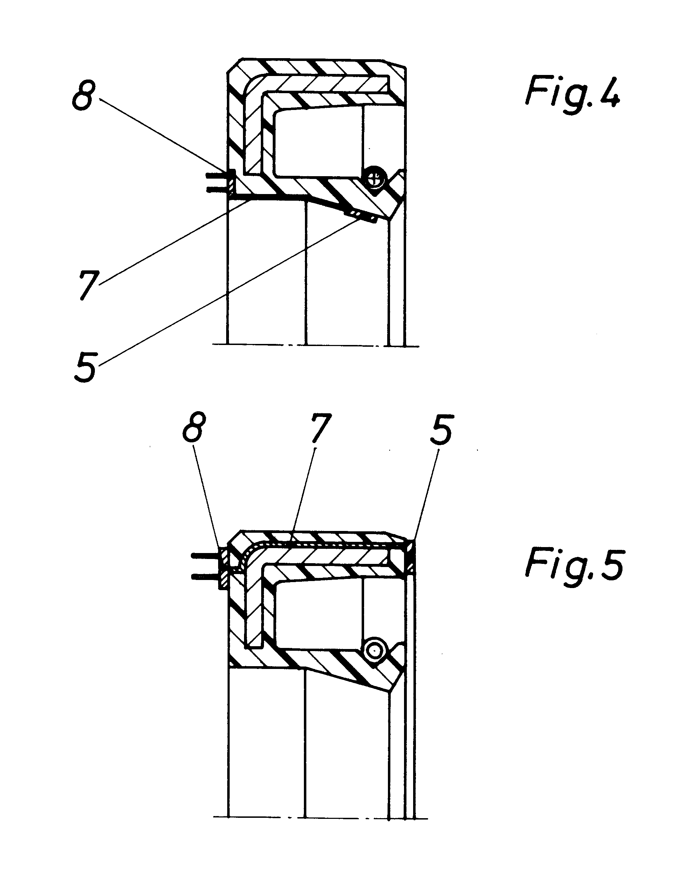

In den Figuren 4 und 5 wird gezeigt, daß auch der Sensor in Verbindung mit der Leitung 7 und der Steckverbindung 8 am Werkstoffkörper 2 angebracht sein kann. So kann beispielsweise die Feuchtigkeit wie z. B. die auftretende Leckage detektiert werden. Der Sensor kann als Hallsensor als auch als elektrische Schaltung ausgebildet sein. Die elektrische Schaltung besteht aus Kapazität und Widerstand. In der Figur 6 wird als mögliche Ausführungsform eine Kunststoff- bzw. Metallschleuderscheibe 11 gezeigt, auf der - bzw. in der der Impulsgeber integriert ist. Diese Elemente können als Vorschaltelemente für Dichtungen verwendet werden.

Die aus der Integration von Dichtung, Sensor und/oder Impulsgeber als Hilfsglieder ausgeführte Dichtung kann je nach den dargestellten Ausführungsformen verschiedene Signale, wie die Temperatur, die Feuchtigkeit, Drehzahl oder den Druck eines abzudichtenden Raumes erfassen und weiterleiten. Eine einfache Impulserzeugung sowie die miniaturisierte Bauweise der signalerfassenden Instrumente innerhalb der Dichtung erweisen sich als kostengünstig und einfach herstellbar.

## Patentansprüche

1. Dichtung mit einem polymeren Werkstoffkörper (2), an dem zumindest in einem Teilbereich ein flexibles Hilfsglied (5) unverrückbar festgelegt ist, das zur Nutzung zumindest einer elektrischen Funktion geeignet ist, dadurch gekennzeichnet, daß das flexible Hilfsglied (5) als elektrischer Impulsgeber und/oder Sensor ausgebildet ist.

2. Dichtung nach Anspruch 1, dadurch gekennzeichnet, daß das Hilfsglied (5) in den Werkstoffkörper (2) eingebettet ist.

3. Dichtung nach Anspruch 1, dadurch gekennzeichnet, daß das Hilfsglied (5) mit der Oberfläche des Werkstoffkörpers (2) verklebt ist.

4. Dichtung nach Anspruch 1 bis 3, dadurch gekennzeichnet, daß das Hilfsglied (5) ringförmig in sich geschlossen ausgebildet ist.

5. Dichtung nach Anspruch 1 bis 4, dadurch gekennzeichnet, daß das Hilfsglied (5) mit einem aus dem Werkstoffkörper (2) herausgeführten, flexiblen Leiter (7) verbunden ist.

6. Dichtung nach Anspruch 1 bis 5, dadurch gekennzeichnet, daß das Hilfsglied (5) durch ein Piezzoelement gebildet ist.

7. Dichtung nach Anspruch 1 bis 5, dadurch gekennzeichnet, daß das Hilfsglied '(5) einen kapazitiven und/oder elektrischen Widerstand enthält.

8. Dichtung nach Anspruch 1 bis 5, dadurch gekennzeichnet, daß das Hilfsglied (5) ein Thermoelement enthält.

9. Dichtung nach Anspruch 1 bis 8, dadurch gekennzeichnet, daß das Hilfsglied (5) mit einem mit dem relativ bewegbaren Maschinenteil (4) verbundenen, zweiten Hilfsglied zu einer Funktionseinheit zusammenfassbar ist.

10. Dichtung nach Anspruch 9, dadurch gekennzeichnet, daß das zweite Hilfsglied (5) dem ersten Hilfsglied (5) entsprechend gestaltet ist.
